# EUROPÄISCHE PATENTSCHRIFT

(11) **EP 3 426 460 B1**
(45) Veröffentlichungstag und Bekanntmachung des Hinweises auf die Patenterteilung: **24.02.2021**
(21) Anmeldenummer: 17700029.6
(22) Anmeldetag: 03.01.2017
(51) Int. Cl.: B29C 49/48, B29C 49/06, B29L 31/00

(54) **LECKAGEFREIE VERBINDUNG FÜR BLASFORMMASCHINEN**
LEAK-FREE CONNECTION FOR BLOW-MOULDING MACHINES
CONNECTEUR SANS FUITE POUR MACHINES DE MOULAGE PAR SOUFFLAGE

(30) Priorität: 08.03.2016 DE 102016104139
(43) Veröffentlichungstag der Anmeldung: 16.01.2019
(73) Patentinhaber: Krones AG, 93073 Neutraubling (DE)
(72) Erfinder: PENSE, Andreas, 93073 Neutraubling (DE); PHILIPP, Thomas, 93073 Neutraubling (DE)
(74) Vertreter: Bittner, Bernhard
(86) Internationale Anmeldenummer: PCT/EP2017/050061
(87) Internationale Veröffentlichungsnummer: WO 2017/153059

(56) Entgegenhaltungen:
- US-A- 5 255 889
- US-A- 5 762 981
- US-A1- 2006 170 138
- US-A1- 2011 129 558
- US-A1- 2012 052 148
- US-B1- 6 428 302

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit langem bekannt. Üblicherweise werden bei diesen Verfahren Kunststoffvorformlinge zunächst erwärmt und dann innerhalb von Blasstationen durch Beaufschlagung mit einem gasförmigen Medium, insbesondere mit Druckluft zu Kunststoffflaschen expandiert. Genauer gesagt werden die Kunststoffvorformlinge in Blasformen eingeführt, die wiederum den Hohlraum ausbilden, innerhalb dessen die Kunststoffvorformlinge expandiert werden.

Diese Blasformen setzen sich dabei üblicherweise zumindest aus zwei Seitenteilen und einem Bodenteil zusammen, welche bezüglich einander bewegt werden können. Genauer können dabei üblicherweise die beiden Seitenteile bezüglich einer Längsachse geschwenkt werden und das Bodenteil kann entlang dieser Längsrichtung zugestellt werden. Darüber hinaus sind auch Verfahren bekannt, bei denen nach dem Schließen der Blasform während des Expansionsvorgangs noch eine zusätzliche Bewegung des Bodenteils innerhalb der Blasform möglich ist. Derartige Prozesse werden teilweise als "Active-Base-Verfahren" bezeichnet. Dabei ist es beispielsweise möglich, dass ein Bodenträger zunächst nach dem Schließen der Blasform mit den Seitenteilen verbunden ist, ein an dem Bodenträger angeordnetes Bodenteil sich jedoch anschließend noch auf das Behältnis zubewegen kann.

Weiterhin ist es bei einigen der genannten Prozesse erforderlich, das Bodenteil zu temperieren, beispielsweise abzukühlen oder zu erwärmen. Zu diesem Zweck sind Temperiermedien vorgesehen, welche im Arbeitsbetrieb durch das Bodenteil oder einen Bodenteilträger geleitet werden. Aus dem internen Stand der Anmelderin ist ein Verbindungssystem der Bodenträgereinheit mit dem Blasformboden durch ein Wellen-Mutter-System bekannt, wobei ein Mutterelement zentrisch an eine in der Bodeneinheit zentrisch angebrachte Welle angebracht ist und ein Gegenstück an dem Blasformboden vorhanden ist. Dieses Wellenmutter-System bewirkt eine zentrische Lagerung des Blasformbodens auf der Bodenträgereinheit. Diese Vorgehensweise hat sich hinsichtlich Stabilität bewährt. Allerdings tritt das Problem auf, dass es bei Blasformwechseln zu einem Austritt der Temperierflüssigkeit kommen kann. Mit anderen Worten erlaubt diese Vorgehensweise keine leckagefreie Verbindung der beiden Elemente bzw. diese ist nur mit einem erhöhten Dichtungsaufwand zu bewerkstelligen.

Die US 6 428 302 B1 zeigt eine Formanordnung mit zwei Formhalbscheiben, entsprechende Formhalbträger und ein Zwischenverbindungsglied mit einem Paar ringförmiger Aufnahmeelemente. Die Aufnahmeelemente weisen eine innere Ausnahmewand und eine abgestufte Schulter auf, die in einen vertieften Schlitz in der Außenwand der Formschalen passt. Die inneren und äußeren Positionswände der Positionierungselemente sind relativ zu jedem vertikal positioniert.

Aus der US 2012/0052148 A1 geht ein Formoberteilträger zum Formen des Bodens einer thermoplastischen Flasche hervor. Auch wird eine Basis gezeigt, die zwischen dem Formoberteil und einem Gleitpolster angeordnet ist, wobei das Gleitpolster auf einem Rahmen der Formträgereinheit geführt ist und die Basis in Form eines doppelwirkenden Zylinderbetätigers ausbildet ist, dessen Stange das Formoberteil trägt.

Die US 5 255 889 zeigt eine modulare Form mit einstellbaren Höhenscheiben. Die Höhenscheiben sind wischen dem oberen und unteren Plattenabschnitt vorgesehen, um das Volumen und die Höhe einer PET-Getränkeflasche einzustellen.

Der vorliegenden Erfindung liegt daher die Aufgabe zugrunde, eine Aufnahmeeinheit für ein Bodenteil einer Blasform zu schaffen, welche auch bei Wechsel- oder Montagevorgängen leichter zu handhaben ist. Insbesondere soll eine Vorrichtung geschaffen werden, welche nach Möglichkeit ein ungewolltes Austreten von Flüssigkeiten, insbesondere bei Montage und/oder Wechselvorgängen verhindert.

Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Umformungsstation zum Umformen von Kunststoffvorformlingen zu Kunststoffbehältnissen weist wenigstens zwei Seitenteilträger zum Tragen von Seitenteilen einer Blasform auf sowie einen Bodenteilträger zum Tragen eines Bodenteils der Blasform auf. Dabei bilden diese Seitenteile und das Bodenteil der Blasform gemeinsam einen Hohlraum aus, innerhalb dessen die Kunststoffvorformlinge durch Beaufschlagung mit einem fließfähigen Medium zu den Kunststoffbehältnissen umformbar sind.

Weiterhin weist der Bodenteilträger einen Grundträger auf, der in einem geschlossenen Zustand der Blasform in einer Längsrichtung der zu expandierenden Kunststoffvorformlinge unbeweglich gegenüber den Seitenteilträgern angeordnet ist (und gegenüber den Seitenteilen fixiert ist). Weiterhin ist ein an diesem Grundträger angeordnetes Bodenteiltrageelement vorgesehen, welches gegenüber dem Grundträger in der genannten Längsrichtung beweglich ist. Auf diese Weise ist insbesondere das Bodenteil der Blasform beweglich.

Erfindungsgemäß ist mittels einer ersten Kupplungseinrichtung eine Strömungsverbindung für ein fließfähiges Medium zwischen dem Grundträger und dem Bodenteiltrageelement herstellbar und diese Kupplungseinrichtung ist wenigstens teilweise leckagefrei ausgebildet.

Es wird daher vorgeschlagen, dass Kupplungseinrichtungen, welche unten genauer beschrieben werden, vorgesehen sind, welche jedoch insbesondere beim Lösen der Kupplungseinrichtungen das Austreten von Flüssigkeiten bzw. Leckagen im Wesentlichen verhindern. Insbesondere handelt es sich bei dem fließfähigen Medium um ein flüssiges Medium, beispielsweise um Öl oder Wasser. Insbesondere handelt es sich hierbei um ein Temperiermedium, um das Bodenteil der Blasform nach Wunsch zu kühlen oder zu erwärmen. Unter einer leckagefreien Ausbildung wird insbesondere verstanden, dass während eines Demontagevorgangs nicht vermehrt Flüssigkeit aus der Kupplungseinrichtung austritt. Das Austreten von geringen Mengen an Flüssigkeit, welche beispielsweise während des Demontierens, etwa während eines Schließvorgangs eines Ventils auftreten können wird jedoch im Rahmen der vorliegenden Beschreibung noch als leckagefrei verstanden.

Unter einer wenigstens teilweise leckagefreien Ausbildung der Kupplungseinrichtung wird verstanden, dass wenigstens ein Element dieser Kupplungseinrichtung leckagefrei ausgebildet ist. Hierbei kann es sich um ein Element handeln, welches dem Bodenteilträger zugeordnet ist oder um ein Element, welches dem Grundträger oder einem an dem Grundkörper beweglich angeordneten Element zugeordnet ist. Auf diese Weise wird bei einer Demontage ein Austreten von Flüssigkeit aus zumindest einem der beiden Elemente der Kupplungseinrichtung verhindert. Auch wäre es denkbar, dass beide Elemente der Kupplungseinrichtung, welche dem Bodenteilträger bzw. dem Grundträger zugeordnet sind, leckagefrei ausgebildet sind.

Bei einer weiteren vorteilhaften Ausführungsform weist die Umformungsstation eine Beaufschlagungseinrichtung auf, welche an eine Mündung der zu expandierenden Kunststoffvorformlinge ansetzbar ist, um diese mit einem fließfähigen und insbesondere gasförmigen Medium zu beaufschlagen.

Bei einer weiteren vorteilhaften Ausführungsform weist die Umformungsstation einen stangenartigen Körper auf, der in die Kunststoffvorformlinge einführbar ist, um diese in deren Längsrichtung zu dehnen.

Bei einer weiteren vorteilhaften Ausführungsform weist die Umformungsstation einen ersten Druckanschluss auf, um ein gasförmiges Medium, beispielsweise Hochdruck zuzuführen. Dieser Hochdruck dient dabei dazu, um die Bewegung des Bodenteiltragelements gegenüber dem Grundträger zu erreichen. Vorteilhaft weist die Vorrichtung einen weiteren Anschluss für ein gasförmiges Medium, beispielsweise einem Niederdruckanschluss auf, wobei dieser Niederdruck dazu dienen kann, um auch eine entsprechende Rückstellbewegung des Bodenteiltragelements gegenüber dem Grundträger zu erreichen.

Insbesondere kann die hier beschriebene Umformungsstation für sogenannte Hot-Fill-Prozesse Anwendung finden, das heißt Prozesse, bei denen im Anschluss an die Herstellung des Behältnisses dieses mit einem heißen Getränk befüllt wird. Durch die hier beschriebene Ausgestaltung des Bodens kann dieser nach der Befüllung mit dem heißen Getränk sein Volumen verringern, indem ein Bestandteil des Bodens nach oben klappt. Genauer kann durch die Bewegung des Bodenteils während des Umformungsprozesses eine entsprechende Klappbarkeit des Bodens erreicht werden.

Bei einer weiteren vorteilhaften Ausführungsform können Eingriffsmittel zwischen dem Grundträger und den Seitenteilträgern und/oder zwischen den Seitenteilen der Blasform vorgesehen sein. Vorteilhaft kann über diese Eingriffsmittel eine Lage des Bodenteils in Längsrichtung gegenüber den Seitenteilen fixiert werden.

Bei einer weiteren vorteilhaften Ausführungsform kann an dem Bodenteiltrageelement ein Bodenteil befestigt werden. Dabei ist es möglich, dass das Bodenteil der Blasform selbst von Temperiermittel durchflossen wird, es kann jedoch auch sein, dass die Wärmeübertragung durch mechanischen Kontakt mit dem Bodenteilträger erfolgt.

Bei einer weiteren vorteilhaften Ausführungsform weist die Kupplungseinrichtung zwei miteinander verbindbare und voneinander trennbare Kupplungselemente auf, sowie eine Fließmittelaustrittsverhinderungseinrichtung, welche bei einer Trennung der Kupplungselemente einen Austritt des fließfähigen Mediums aus wenigstens einem der beiden Kupplungselemente verhindert. Dabei kann es sich beispielsweise bei der Fließmittelaustrittsverhinderungseinrichtung um ein Ventilelement handeln, welches beispielsweise beim Trennen der Kupplungselemente geschlossen wird.

Bevorzugt weist daher wenigstens eines der beiden Kupplungselemente eine Ventileinrichtung auf. Vorteilhaft weist diese Ventileinrichtung eine Federeinrichtung auf, welche die Ventileinrichtung bzw. einen Ventilkörper in eine geschlossene Stellung drängt. Dies bedeutet, dass bevorzugt diese Ventileinrichtung ohne externe Kraftanwendung in einem geschlossenen Zustand ist. Ein Öffnen dieser Ventileinrichtung kann insbesondere durch ein Zusammenstecken bzw. Zusammenschieben der Kupplungselemente erreicht werden.

Bevorzugt handelt es sich daher bei der Fließmittelaustrittsverhinderungseinrichtung um ein Ventil, welches bei einer Trennung der Kupplungselemente geschlossen wird. Bevorzugt kann dabei jeweils ein Kupplungselement ein Betätigungselement für das Ventil des anderen Kupplungselements aufweisen. Dabei kann beispielsweise ein Kupplungselement einen stift- und/oder rohrartigen Körper aufweisen, der in eine entsprechende Ausnehmung des anderen Kupplungselements einführbar ist und dieses so betätigt. Durch eine derartige Ausgestaltung als stift- und/oder rohrartiges Element kann gleichzeitig auch eine mechanische Fixierung zwischen den beiden Kupplungselementen erreicht werden.

Bei einer weiteren vorteilhaften Ausführungsform können die Kupplungselemente durch eine Relativbewegung des Bodenteiltrageelements gegenüber dem Grundträger miteinander verbunden oder voneinander getrennt werden. Insbesondere handelt es sich hierbei um eine Relativbewegung in der Längsrichtung der zu expandierenden Kunststoffvorformlinge. Bei dieser Längsrichtung handelt es sich insbesondere auch um eine Längsrichtung der Umformungsstation. Bevorzugt verläuft diese Längsrichtung parallel zu einer Schwenkachse, bezüglich derer wenigstens einer der beiden Seitenteilträger geschwenkt wird, um die Blasform zu öffnen und zu schließen.

Bei einer weiteren vorteilhaften Ausführungsform weist die Umformungseinrichtung eine pneumatische Antriebsvorrichtung auf, um das Bodenteiltrageelement gegenüber dem Grundträger zu bewegen. So kann beispielsweise zu einer Bewegung des Bodenteiltrageelements Hochdruck eingesetzt werden. Anstelle einer pneumatischen Betätigung wäre jedoch auch eine elektromotorische Betätigung oder etwa eine hydraulische Betätigung möglich.

Bei einer weiteren vorteilhaften Ausführungsform weist die Umformungsstation eine zweite Kupplungseinrichtung auf, mittels derer eine Strömungsverbindung für ein fließfähiges Medium zwischen dem Grundträger und dem Bodenteiltrageelement herstellbar ist und diese Kupplungseinrichtung ist bevorzugt ebenfalls leckagefrei ausgebildet. Durch das Vorsehen zweier Kupplungseinrichtungen kann insbesondere ein Temperierkreislauf geschlossen werden, das heißt es kann ein Vorlauf und ein Rücklauf für ein Temperiermedium zur Verfügung gestellt werden.

Vorteilhaft sind diese beiden Kupplungseinrichtungen gleichartig ausgebildet. Dabei ist es insbesondere möglich, dass sich die beiden Kupplungseinrichtungen parallel zueinander erstrecken. Auch ist es möglich, dass die beiden Kupplungseinrichtungen bei der Montage im Wesentlichen zeitgleich verbunden werden.

Bei einer weiteren vorteilhaften Ausführungsform stellt wenigstens eine Kupplungseinrichtung auch eine mechanische Verbindung zwischen dem Grundträger und dem Bodenteiltrageelement her. Auf diese Weise wird in besonders einfacher Weise durch das gleiche Element sowohl eine mechanische als auch eine fluidtechnische Verbindung zwischen dem Grundträger und dem Bodenteiltrageelement hergestellt. Insbesondere wird dabei diese mechanische Verbindung hergestellt, um die beiden Teile aneinander zu befestigen. Vorteilhaft ist dabei dieses Kupplungselement mit einer ausreichenden mechanischen Steifigkeit bzw. Stärke ausgebildet. Vorteilhaft wird eine kraftschlüssige und/oder formschlüssige Verbindung zwischen den beiden Elementen über die Kupplungseinrichtung hergestellt.

Bevorzugt sind jedoch zusätzliche Befestigungsmittel vorgesehen, um das Bodenteil an dem Bodenteilträger zu befestigen und/oder um das Bodenteil zumindest mittelbar an dem beweglichen Kolben zu befestigen. Bevorzugt ist wenigstens ein erstes Kupplungselement und sind bevorzugt zwei erste Kupplungselemente an dem Bodenteilträger angeordnet. Hierbei handelt es sich um diejenigen Kupplungselemente, die gemeinsam mit dem Bodenteil von dem Grundträger abgenommen werden können. Bei einer weiteren vorteilhaften Ausführungsform ist wenigstens ein zweites Kupplungselement und sind bevorzugt zwei zweite Kupplungselemente an einem Basisträger angeordnet. Weiterhin ist es möglich, dass die oben genannten Befestigungsmittel oder andere Befestigungsmittel dazu dienen, um das Bodenteil an diesem Basisträger zu befestigen und/oder dazu, um den Bodenteilträger an dem Basisträger zu befestigen. Bei einer bevorzugten Ausführungsform handelt es sich bei den Befestigungsmitteln um Schraubkörper.

Bei einer weiteren vorteilhaften Ausführungsform ist wenigstens eine Kupplungseinrichtung auch derart ausgelegt, dass sie eine zentrische Lagerung des Bodenteiltragelements an dem Grundträger ermöglicht.

Bei einer weiteren vorteilhaften Ausführungsform wird durch die Position der Kupplungselemente auch eine Winkelstellung des Bodenteils definiert.

Damit kann die hier beschriebene Bodeneinheit, insbesondere für das oben genannte "Active-Base-Verfahren" eingesetzt werden und beinhaltet eine leckagefreie Kupplung. Diese Kupplung fungiert dabei bevorzugt auch als Verbindungselement zwischen dem Grundträger bzw. der Bodenträgereinheit und dem Formboden bzw. Blasformboden.

Vorteilhaft verlaufen, wie oben erwähnt, auch Zu- und Ablaufelemente für die Bodentemperierung durch die Kupplungseinrichtung und somit ist ein leckagefreier Medienkreislauf, auch bei Wechsel der Bodenformen, möglich. Die Kupplungselemente sind bevorzugt jeweils feste Bestandteile der Hubeinheit bzw. des Grundträgers einerseits und der Bodenform andererseits.

Durch die Erfindung wird eine leckagefreie Verbindung der Bodeneinheit und des Formträgerbodens erreicht. Falls auf ein neues Behältnisdesign bzw. auf andere Behältnisse umgestellt werden soll, braucht nur das Bodenformelement gewechselt zu werden und nicht, wie im Stand der Technik, die gesamte Bodeneinheit. Auf diese Weise wird die Schnittstelle zwischen dem Garniturenteil und der Hubeinheit verbessert.

Bei einer weiteren vorteilhaften Ausführungsform ist wenigstens ein Kupplungselement der ersten Kupplungseinrichtung fest an den Bodenteiltragelement angeordnet und/oder wenigstens ein Kupplungselement fest an einem gegenüber dem Grundträger beweglichen Element angeordnet.

Bei einer weiteren vorteilhaften Ausführungsform weist wenigstens ein Kupplungselement einen Vorsprung auf, der in eine Ausnehmung des anderen Kupplungselements einführbar ist.

Bei einer weiteren vorteilhaften Ausführungsform weist die Bewegungseinrichtung zum Erreichen der Relativbewegung zwischen dem Grundträger und dem Bodenteilträger einen Kolben auf, der innerhalb eines Kolbenraums durch Beaufschlagung mit Druckluft bewegbar ist.

Die vorliegende Erfindung ist weiterhin auf eine Vorrichtung zum Umformen von Kunststoffvorformlingen zu Kunststoffbehältnissen gerichtet. Diese Vorrichtung weist einen bewegbaren Träger auf und eine Vielzahl von an diesen Träger angeordneten Umformungsstationen der oben beschriebenen Art. Bevorzugt handelt es sich bei diesem bewegbaren Träger um einen drehbaren Träger wie insbesondere ein sogenanntes Blasrad.

Weitere Vorteile und Ausführungsformen ergeben sich aus den beigefügten Figuren.

Darin zeigen:
- Fig. 1: Eine schematische Darstellung einer erfindungsgemäßen Umformungsstation;
- Fig. 2: eine Detaildarstellung eines Bodenzustellmechanismus für eine erfindungsgemäße Umformungsstation;
- Fig. 3: den Bodenhubmechanismus in einem getrennten Zustand; und
- Fig. 4: eine Außenansicht eines erfindungsgemäßen Bodenhubmechanismus.

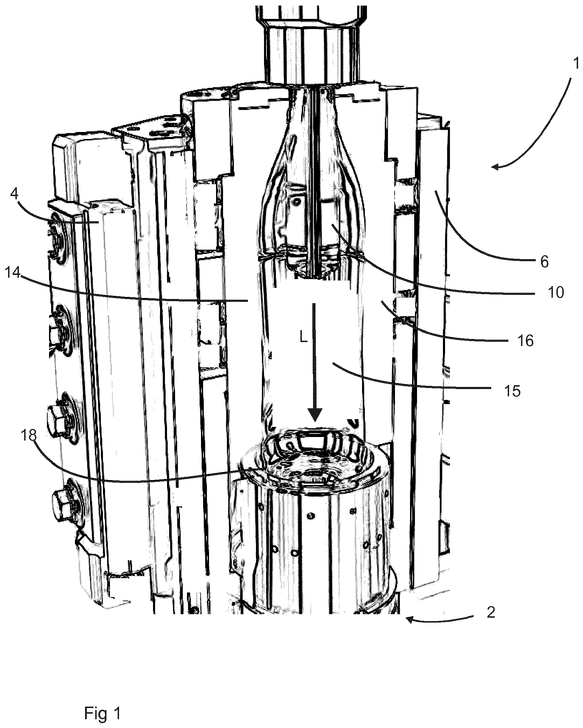

Figur 1 zeigt eine grobschematische Darstellung einer erfindungsgemäßen Umformungsstation zum Umformen von Kunststoffvorformlingen 10 zu Kunststoffbehältnissen. Diese Umformungsstation weist dabei zwei Seitenteilträger 4, 6 (nur schematisch dargestellt) auf, an denen Seitenteile 14 und 16 einer Blasform angeordnet sind. Im Betrieb können diese Seitenteile (insbesondere bezüglich einer vertikalen, jedoch nicht gezeigten Achse) auseinandergeschwenkt werden, um einen Vorformling einzubringen. Diese Achse verläuft dabei auch in der Längsrichtung des zu expandierenden Kunststoffvorformlings. Nach dem Blasvorgang können diese Seitenteile wieder geöffnet werden, um die umgeformte Kunststoffflasche entnehmen zu können. Das Bezugszeichen 15 bezieht sich auf den Hohlraum, in dessen Innerem die Kunststoffvorformlinge expandiert werden

Das Bezugszeichen 18 kennzeichnet ein Bodenteil, welches zur Erzeugung des Bodenabschnitts des Kunststoffbehältnisses dient. Dieses Bodenteil ist hier in der Längsrichtung L des Kunststoffvorformlings bewegbar. Mit anderen Worten kann dieses Bodenteil an einem beweglichen Kolben angeordnet sein, um so während des Blasprozesses angehoben zu werden. Dabei ist es beispielsweise bei dem oben erwähnten Active-Base-Verfahren möglich, dass zunächst die Kunststoffflasche bis zu einem gewissen Grad mittels einer (nicht gezeigten) Reckstange gereckt und geblasen wird und anschließend das Bodenteil auf den Boden zugestellt wird.

Weiterhin ist ein nicht gezeigter Grundträger vorhanden. Beim Schließen der Blasform wird dieser Grundträger fest mit den Seitenteilen bzw. den Seitenteilträgern 4 und 6 verankert und bewegt sich daher nicht. Innerhalb des Grundträgers ist das besagte Bodenteil 18 beweglich angeordnet. Dabei ist ein Bodenteiltragelement (nicht gezeigt) vorgesehen, an dem das Bodenteil 18 angeordnet ist.

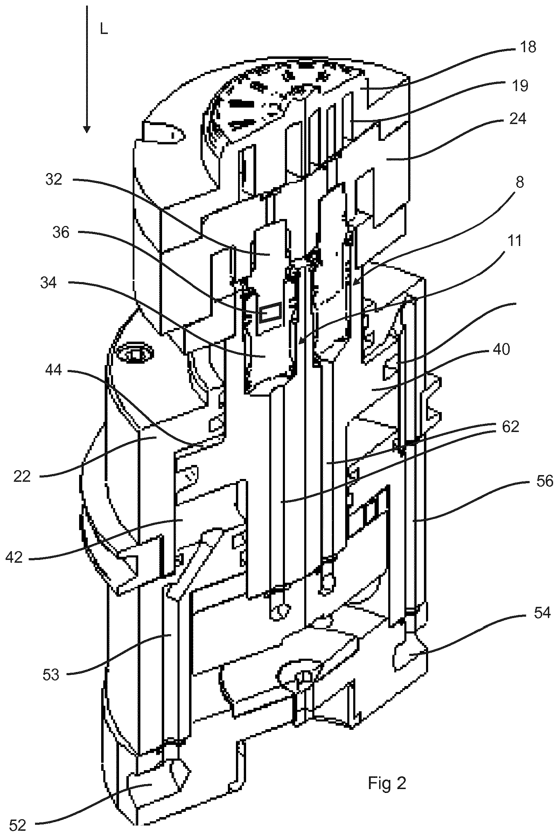

Figur 2 zeigt eine Schnittdarstellung eines erfindungsgemäßen Bodenteiltragemechanismus. Hier ist wiederum das Bodenteiltragelement 24 vorgesehen, an den das Bodenteil 18 angeordnet ist. Das Bezugszeichen 40 bezieht sich auf einen beweglichen Kolben, der in der Längsrichtung L beweglich ist. Gleichzeitig sind in diesem Kolben zwei Leitungen 62 vorgesehen, welche zur Zuführung und Abführung eines Temperiermediums letztlich an das Bodenteil 18 dienen.

Das Bezugszeichen 8 kennzeichnet in seiner Gesamtheit eine Kupplungseinrichtung, mittels derer das Bodenteil 18 bzw. der Bodenteilträger 24 an dem Grundträger 22 angeordnet ist und mittels derer die Fluidverbindung für das Temperiermedium hergestellt wird. Das Bezugszeichen 11 kennzeichnet eine zweite Kupplungseinrichtung, welche bevorzugt in der gleichen Weise wie die Kupplungseinrichtung 8 ausgebildet ist.

Die Kupplungseinrichtung 8 (und auch die Kupplungseinrichtung 11) weist dabei zwei von einander trennbare Kupplungselemente 32 und 34 auf. Diese Kupplungselemente können dabei durch Verschieben in der Längsrichtung L zusammengeschoben werden. Das Bezugszeichen 36 kennzeichnet grobschematisch eine Ventileinrichtung, welche hier Bestandteil des ersten Kupplungselements 32 ist. Beim Abnehmen des Bodenteils 18 bzw. des Bodenteiltrageelements 24, das heißt hier in der Figur bei einem nach oben Abziehen wird diese Ventileinrichtung schließen, sodass keine Flüssigkeit aus der ersten Kupplungseinrichtung austreten kann. Das Bezugszeichen 19 kennzeichnet schematisch ein Kanalsystem, durch welches die Temperierflüssigkeit fließen kann, um das Bodenteil 18 zu temperieren.

Das Bezugszeichen 40 kennzeichnet einen Kolben, der innerhalb eines Kolbenraums in Richtung der Längsrichtung L verschiebbar ist. Die Bezugszeichen 42 und 44 kennzeichnen erste und zweite Kolbenteilräume, zwischen denen der Kolben sich bewegen kann.

Das Bezugszeichen 52 kennzeichnet einen Druckluftanschluss, über welchen dem Kolbenteilraum 42 über die Leitung 53 Druckluft zugeführt werden kann. Durch diese Hochdruckluft kann das Bodenteil 18 nach oben bewegt werden.

Das Bezugszeichen 54 kennzeichnet einen Niederdruckanschluss, der über eine Verbindungsleitung 56 dem oberen Kolbenteilraum 44 zugeführt werden kann. Durch die Zuführung dieser Druckluft kann, insbesondere nach einem erfolgten Blasformvorgang, wieder eine Rückstellung des Bodenteils, also hier eine Bewegung nach unten erreicht werden. Es wäre jedoch auch denkbar, für diese Rückstellbewegung eine Feder vorzusehen.

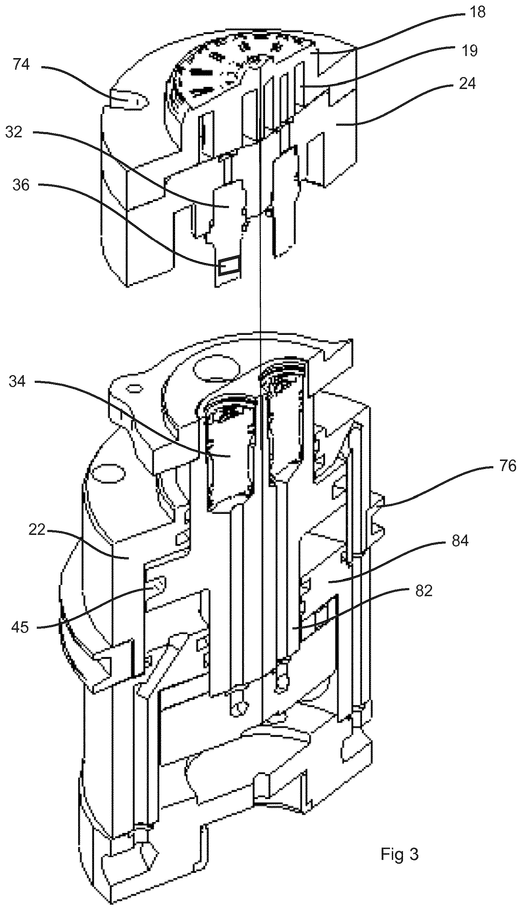

Figur 3 zeigt eine Darstellung ähnlich derjenigen aus Figur 2, wobei jedoch hier das Bodenteil 18 bzw. der Bodenteilträger 24 von dem Grundträger 22 getrennt wurden. Man erkennt auch hier, dass die Kupplungselemente 32 und 34 voneinander getrennt wurden. Auf diese Weise wird auch das nur schematisch dargestellte Ventil 36 geschlossen. Entsprechende Ventilelemente 38 können auch in dem Kupplungselement 34 vorgesehen sein.

Man erkennt, dass hier jeweils zwei erste und zweite Kupplungselemente 32 und 34 vorgesehen sind, welche entsprechend einen Vorlauf und einen Rücklauf für das Temperiermedium bilden. Gleichzeitig wird durch die Anordnung der Kupplungselemente 32 und 34 auch der Bodenteilträger 24 gegenüber dem Grundträger 22 positioniert. Es wäre jedoch zusätzlich denkbar und bevorzugt, den Bodenteilträger 24 an den Grundträger 22 festzuschrauben. Zu diesem Zweck weist der Grundträger 22 eine Öffnung beispielsweise ein Gewinde 72 auf, in welches beispielsweise ein Schraubkörper geführt werden kann, wobei dieser Schraubkörper wiederum durch eine Nut 74 geführt werden kann, um so die Bodenteilträger 24 mit dem Grundträger 22 miteinander zu verschrauben.

Das Bezugszeichen 76 kennzeichnet ein umlaufendes Eingriffsmittel, in welches bei einem Schließen der Blasform die Seitenteilträger 4,6 der Blasform eingreifen können, um so den Grundträger 22 in der Längsrichtung L gegenüber den Seitenteilträgern zu stabilisieren.

Das Bezugszeichen 45 kennzeichnet grobschematisch eine Kolbenabdichteinrichtung. Oberhalb der Kolbenabdichteinrichtung kann ein (nicht gezeigter) Verschleißschutzring vorgesehen sein. Daneben kann auch noch zur Abdichtung ein weiterer O-Ring (nicht gezeigt) oberhalb dieses Verschleißrings vorgesehen sein.

Der Kolbenabschnitt 82 kann bei der hier gezeigten Ausführungsform mittelbar mit dem Bodenteilträger 24 verschraubt werden. Auf diese Weise wird eine stabile Verbindung zwischen dem Bodenteil und dem Grundträger 22 hergestellt. Das Bezugszeichen 84 kennzeichnet eine Hülse, innerhalb derer der Kolbenabschnitt geführt wird.

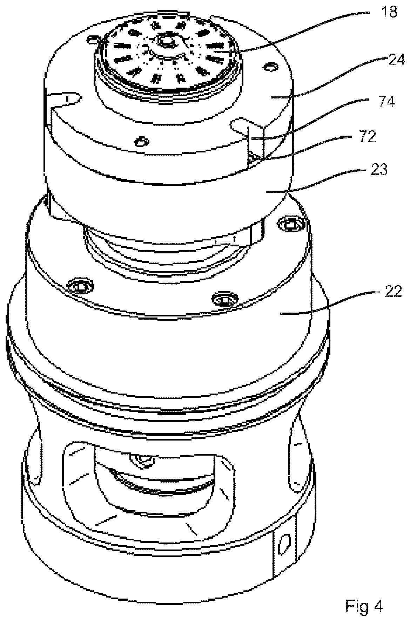

Figur 4 zeigt eine Aussenansicht eines Bodenteiltragemechanismus. Der Grundträger 22 weist dabei hier drei Öffnungen auf, über welche beispielsweise die Temperiermedien zugeführt werden können. Das Bezugszeichen 23 kennzeichnet den Basisträger, der die Kupplungselemente 34 aufnimmt und an dem das Bodenteiltrageelement 24 angeschraubt ist. Dabei können die Kupplungselemente hier Ausnehmungen aufweisen, in welche die Kupplungselemente 32 einführbar sind.

### Bezugszeichenliste

- 1: Umformungsstation
- 2: Bodenteilträger
- 4,6: Seitenteilträger
- 8: Kupplungseinrichtung
- 10: Kunststoffvorformlinge
- 11: Kupplungseinrichtung
- 14, 16: Seitenteile
- 18: Bodenteil
- 19: Kanalsystem
- 22: Grundträger
- 23: Basisträger
- 24: Bodenteiltragelement
- 32, 34: Kupplungselemente
- 36: Ventileinrichtung
- 38: Ventilelemente
- 40: beweglicher Kolben
- 42, 44: Kolbenteilräume
- 45: Kolbenabdichteinrichtung
- 52: Druckluftanschluss
- 53: Leitung
- 54: Niederdruckanschluss
- 56: Verbindungsleitung
- 62: Leitungen
- 72: Gewinde
- 74: Nut
- 76: umlaufendes Eingriffsmittel
- 82: Kolbenabschnitt
- 84: Hülse
- L: Längsrichtung

## Patentansprüche

1. Umformungsstation (1) zum Umformen von Kunststoffvorformlingen (10) zu Kunststoffbehältnissen, wobei die Umformungsstation (1) zwei Seitenteilträger (4, 6) zum Tragen von Seitenteilen (14, 16) einer Blasform aufweist sowie einen Bodenteilträger (2) zum Tragen eines Bodenteils (18) der Blasform, wobei diese Seitenteile (14, 16) und das Bodenteil (18) der Blasform gemeinsam einen Hohlraum (15) ausbilden, innerhalb dessen die Kunststoffvorformlinge (10) durch Beaufschlagung mit einem fließförmigen Medium zu den Kunststoffbehältnissen umformbar sind, wobei der Bodenteilträger (2) einen Grundträger (22) aufweist, der in einem geschlossenen Zustand der Blasform in einer Längsrichtung (L) der zu expandierenden Kunststoffvorformlinge unbeweglich gegenüber den Seitenteilträgern (4, 6) angeordnet ist, sowie ein an diesem Grundträger (22) angeordnetes Bodenteiltragelement (24), welches gegenüber dem Grundträger (22) in dieser Längsrichtung (L) beweglich ist, wobei mittels wenigstens einer ersten Kupplungsein,richtung (8) eine Strömungsverbindung für ein fließfähiges Medium zwischen dem Grundträger und dem Bodenteiltragelement (24) herstellbar ist und diese Kupplungseinrichtung (8) wenigstens teilweise leckagefrei ausgebildet ist, **dadurch gekennzeichnet, dass** die Kupplungseinrichtung (8) zwei miteinander verbindbare und voneinander trennbare Kupplungselemente (32, 34) aufweist sowie eine Fließmittelaustrittsverhinderungseinrichtung (36), welche bei einer Trennung der Kupplungselemente einen Austritt des Fließmittels aus wenigstens einem der beiden Kupplungselemente verhindert.

2. Umformungsstation (1) nach Anspruch 1,
**dadurch gekennzeichnet, dass**
wenigstens eines der beiden Kupplungselemente (32, 34) eine Ventileinrichtung (36) aufweist.

3. Umformungsstation (1) nach wenigstens einem der vorangegangenen Ansprüche,
**dadurch gekennzeichnet, dass**
die Kupplungselemente (32, 34) durch eine Relativbewegung des Bodenteiltrageelements (24) gegenüber dem Grundträger (22) miteinander verbunden oder voneinander getrennt werden können.

4. Umformungsstation (1) nach wenigstens einem der vorangegangenen Ansprüche,
**dadurch gekennzeichnet, dass**
die Umformungsstation (1) eine pneumatische Antriebsvorrichtung aufweist, um das Bodenteiltrageelement (24) gegenüber dem Grundträger (22) zu bewegen.

5. Umformungsstation (1) nach wenigstens einem der vorangegangenen Ansprüche,
**dadurch gekennzeichnet, dass**
die Umformungsstation (1) eine zweite Kupplungseinrichtung (11) aufweist, mittels derer eine Strömungsverbindung für ein fließfähiges Medium zwischen dem Grundträger (22) und dem Bodenteiltragelement (24) herstellbar ist und diese Kupplungseinrichtung (11) bevorzugt leckagefrei ausgebildet ist.

6. Umformungsstation (1) nach wenigstens einem der vorangegangenen Ansprüche,
**dadurch gekennzeichnet, dass**
wenigstens eine Kupplungseinrichtung (8, 11) eine mechanische Verbindung zwischen dem Grundträger (22) und dem Bodenteiltragelement (24) herstellt.

7. Umformungsstation (1) nach wenigstens einem der vorangegangenen Ansprüche,
**dadurch gekennzeichnet, dass**
wenigstens ein Kupplungselement (32, 34) der ersten Kupplungseinrichtung (8) fest an dem Bodenteiltragelement (24) angeordnet ist und/oder wenigstens ein Kupplungselement (32, 34) fest an einem gegenüber dem Grundträger (22) in der Längsrichtung (L) beweglichen Element (40) angeordnet ist.

8. Umformungsstation (1) nach wenigstens einem der vorangegangenen Ansprüche,
**dadurch gekennzeichnet, dass**
wenigstens ein Kupplungselement (32, 34) einen Vorsprung aufweist, der in eine Ausnehmung des anderen Kupplungselements (34, 32) einführbar ist.

9. Vorrichtung zum Umformen von Kunststoffvorformlingen (10) zu Kunststoffbehältnissen mit einem bewegbaren Träger und mit wenigstens einer an diesem Träger angeordneten Umformungsstation (1) nach wenigstens einem der vorangegangenen Ansprüche.

## Claims

1. Transforming station (1) for transforming plastic preforms (10) into plastic containers, wherein the transforming station (1) has two side part supports (4, 6) for supporting side parts (14, 16) of a blow mold as well as a bottom part support (2) for supporting a bottom part (18) of the blow mold, wherein, together, these side parts (14, 16) and the bottom part (18) of the blow mold form a hollow space (15), within which the plastic preforms (10) are transformable into the plastic containers by application with a flowable medium, wherein the bottom part support (2) comprises a base support (22), which is arranged in a fixed manner relative to the side part supports (4, 6) in a closed condition of the blow mold in a longitudinal direction (L) of the plastic preforms to be expanded, as well as a bottom part support element (24) being arranged on this base support (22), which is movable relative to the base support (22) in this longitudinal direction (L), wherein, by means of at least one first coupling device (8) a fluid connection for a flowable medium between the base support and the bottom part support element (24) is able to be established and this coupling device (8) is at least partially formed to be free from leakage,
**characterized in that**
the coupling device (8) has two coupling elements (32, 34) being able to be connected with each other and separated from each other, as well as a flow agent leakage preventing device (36), which, in the case of separation of the coupling elements, prevents leakage of the flow agent from at least one of those two coupling elements.

2. Transforming station (1) according to claim 1,
**characterized in that**
at least one of those two coupling elements (32, 34) comprise a valve device (36).

3. Transforming station (1) according to at least one of the preceding claims,
**characterized in that**
the coupling devices (32, 34) can be connected with each other or separated from each other by a relative movement of the bottom part support element (24) relative to the base support (22).

4. Transforming station (1) according to at least one of the preceding claims,
**characterized in that**
the transforming station (1) has a pneumatic drive device, in order to move the bottom part support element (24) relative to the base support (22).

5. Transforming station (1) according to at least one of the preceding claims,
**characterized in that**
the transforming station (1) has a second coupling device (11), by way of which a fluid connection for a flowable medium between the base support (22) and the bottom part support element (24) can be established and this coupling device (11) is preferably formed to be free from leakage.

6. Transforming station (1) according to at least one of the preceding claims,
**characterized in that**
at least one coupling device (8, 11) establishes a mechanical connection between the base support (22) and the bottom part support element (24).

7. Transforming station (1) according to at least one of the preceding claims,
**characterized in that**
at least one coupling element (32, 34) of the first coupling element (8) is arranged in a fixed manner on the bottom part support element (24) and/or at least one coupling element (32, 34) is arranged in a fixed manner on an element (40) which is movable relative to the base support (22) in the longitudinal direction (L).

8. Transforming station (1) according to at least one of the preceding claims,
**characterized in that**
at least one coupling element (32, 34) has a protrusion which is able to be introduced into a recess of the other coupling element (34, 32).

9. Apparatus for transforming plastic preforms (10) into plastic containers having a movable support and at least one transforming station (1) being arranged on this support according to at least one of the preceding claims.

## Revendications

1. Station de formage (1) pour le formage de préformes en plastiques (10) en contenants en plastique, la station de formage (1) présentant deux supports de parties latérales (4, 6) pour supporter des parties latérales (14, 16) d'un moule de soufflage ainsi qu'un support de partie de base (2) pour supporter une partie de base (18) du moule de soufflage, ces parties latérales (14, 16) et la partie inférieure (18) du moule de soufflage formant conjointement une cavité (15) à l'intérieur de laquelle les préformes en plastique (10) peuvent être formées en des contenants en plastique par l'application d'un milieu fluide, le support de partie de base (2) présentant un support de base (22) qui, dans un état fermé du moule de soufflage, est immobile par rapport aux supports de partie latérale (4, 6) dans une direction longitudinale (L) des préformes plastiques à expanser, ainsi qu'un élément de support de partie de base (24) disposé sur ce support de base (22) qui est mobile dans cette direction longitudinale (L) par rapport au support de base (22), dans lequel au moyen d'au moins un premier dispositif de couplage (8) une connexion d'écoulement pour un milieu fluide peut être établie entre le support de base et l'élément de support de partie de base (24), dans lequel ce dispositif de couplage (8) est au moins partiellement étanche,
**caractérisée en ce que**
le dispositif d'accouplement (8) comporte deux éléments d'accouplement (32, 34) qui peuvent être reliés et séparés l'un de l'autre ainsi qu'un dispositif de prévention de décharge de fluide d'écoulement (36) qui empêche le fluide de s'échapper d'au moins l'un des deux éléments de couplage lorsque les éléments de couplage sont séparés.

2. Station de formage (1) selon la revendication 1,
**caractérisée en ce que**
au moins l'un des deux éléments d'accouplement (32, 34) présente un dispositif de soupape (36).

3. Station de formage (1) selon au moins l'une des revendications précédentes,
**caractérisée en ce que**
les éléments d'accouplement (32, 34) peuvent être reliés les uns aux autres ou séparés les uns des autres par un mouvement relatif de l'élément de support de base (24) par rapport au support de base (22).

4. Station de formage (1) selon au moins l'une des revendications précédentes,
**caractérisée en ce que**
la station de formage (1) présente un dispositif d'entraînement pneumatique pour déplacer l'élément de support de pièce de base (24) par rapport au support de base (22).

5. Station de formage (1) selon au moins l'une des revendications précédentes,
**caractérisée en ce que**
la station de formage (1) présente un deuxième dispositif de couplage (11) au moyen duquel une connexion d'écoulement pour un milieu fluide peut être établie entre le support de base (22) et l'élément de support de partie de base (24) et ce dispositif de couplage (11) est de préférence conçu sans fuite.

6. Station de formage (1) selon au moins l'une des revendications précédentes,
**caractérisée en ce que**
au moins un dispositif d'accouplement (8, 11) crée une liaison mécanique entre le support de base (22) et l'élément de support de partie de base (24).

7. Station de formage (1) selon au moins l'une des revendications précédentes,
**caractérisée en ce que**
au moins un élément d'accouplement (32, 34) du premier dispositif d'accouplement (8) est disposé de manière fixe sur l'élément de support de partie de base (24) et/ou au moins un élément d'accouplement (32, 34) est disposé de manière fixe sur un élément (40) qui est mobile dans la direction longitudinale (L) par rapport au support de base (22).

8. Station de formage (1) selon au moins l'une des revendications précédentes,
**caractérisée en ce que**
au moins un élément de couplage (32, 34) présente une saillie qui peut être insérée dans un évidement de l'autre élément de couplage (34, 32).

9. Dispositif pour le formage de préformes en plastiques (10) en contenants en plastique avec un support mobile et avec au moins une station de formage (1) selon au moins l'une des revendications précédentes disposée sur ce support.
